# EUROPEAN PATENT SPECIFICATION

(11) **EP 3 502 462 B1**
(45) Date of publication and mention of the grant of the patent: **21.04.2021**
(21) Application number: 17306825.5
(22) Date of filing: 19.12.2017
(51) Int. Cl.: F03B 15/00

(54) **INSTALLATION FOR CONVERTING HYDRAULIC ENERGY INTO ELECTRICAL ENERGY WITH A HYDRAULIC MACHINE AND A STATIC FREQUENCY CONVERTER AND CORRESPONDING METHOD**
ANLAGE ZUR UMWANDLUNG HYDRAULISCHER ENERGIE IN ELEKTRISCHE ENERGIE MIT EINER HYDRAULISCHEN MASCHINE UND STATISCHER FREQUENZUMSETZER UND ENTSPRECHENDES VERFAHREN
INSTALLATION DE CONVERSION D'ÉNERGIE HYDRAULIQUE EN ÉNERGIE ÉLECTRIQUE COMPORTANT UNE MACHINE HYDRAULIQUE ET UN CONVERTISSEUR DE FRÉQUENCE STATIQUE ET PROCÉDÉ CORRESPONDANT

(43) Date of publication of application: 26.06.2019
(73) Proprietor: GE Renewable Technologies, 38100 Grenoble (FR)
(72) Inventor: ALLOIN, Quentin, 38100 GRENOBLE (FR); THEOPHANE, Foggia, 38100 GRENOBLE (FR); RENAUD, Guillaume, 38100 GRENOBLE (FR)
(74) Representative: Brevalex

(56) References cited:
- EP-A1- 0 243 937
- EP-A1- 3 059 854
- WO-A1-2005/073550
- US-A- 4 641 040

## Description

The invention relates to a method of command of a hydraulic machine and more particularly of a hydraulic machine in turbine mode.

Hydroelectric powerplants are fitted with at least a hydraulic machine operated as a turbine to generate electric power from a water flow. The power is generated by a generator or alternator mechanically coupled to the hydraulic machine, see e.g. US4641040 and EP 3059854.

The generator is fitted with a number of poles and operated to generate power at the frequency of the grid, 50Hz or 60Hz in most countries. Since the frequency of the power output by the generator is directly linked to the rotation speed of the generator through its number of poles, only one rotation speed is able to output a current at a 50Hz or 60Hz frequency.

The output power of the Francis turbine is adjusted thanks to the water flow. The water flow adjustment is performed by guide vanes located around the hydraulic turbine. The hydraulic turbine can safely operate in a certain range of flow typically situated around the best efficiency point. It is known that hydraulic instability appears when the plant is operated at partial load conditions or low power loads. The instability may cause power fluctuations or damage different parts of the turbine, preventing continuous operation of the hydraulic machine at low power loads. One solution to work at partial load consists in changing the hydraulic profile by developing a dedicated hydraulic design for the hydraulic machine. According to the state of the art, such design would be detrimental to the efficiency of the hydraulic machine.

The emergence of renewable and sustainable energy production has sparkled interest into energy storage in order to mitigate blackouts between peak production times and off times. Hydroelectric powerplants have been fitted to provide energy storage through the use of hydraulic machines able to be operated either as a pump, enabling the storage of power by pumping up water into a reservoir or as a turbine to produce energy in a regular way. Those hydroelectric powerplants are known as pumped hydroelectric energy storage (PHES) plants.

Reversible Francis turbines, also called pump-turbines, are able to operate in both sense of rotation in order to either produce electricity in turbine mode or pump water up to the reservoir in pump mode.

To start in pump mode, one cannot just connect a hydraulic machine to the grid to store power. Speed must be ramped up until it reaches the speed linked to the frequency of the grid but in pump mode, the input power cannot be regulated because guide vanes have no effect. During the speed ramp up, it is known that the input power can be provided to the generator trough static frequency converters (SFC). In this application, SFC must be sized to be able to perform the speed ramp up in a given time meaning that the SFC is partially sized in regard of the full power of the hydraulic machine. Air is often injected into the turbine to dewater it and consequently decrease losses, allowing to decrease the size of the SFC.

In an attempt to achieve greater flexibility, full sized static frequency converters can be added to PHES plants to allow power variation in pump mode by varying the unit speed in operation. Such installations are able to operate the hydraulic machine at different speeds while outputting a current at a fixed frequency. For this application, such SFCs have to be sized to accommodate all the power generated by the generator. Such installation is known as "Fully fed" technology. Its disadvantage resides in the cost of the SFC and the switching losses associated in the entire operating range.

As seen before, power electronics is currently used to solve different problems: first the start-up in pump mode, and second the power variation in pump mode. In this invention, the authors propose an innovative use of the power electronics (SFC) to solve the problem of the low power load operation in turbine mode.

When operated in turbine mode, the hydraulic machines of those new plants are limited by the hydraulic instability, and cannot operate at low power loads.

When performing research regarding efficiency and ageing of hydraulic machine used in such plants, the inventors have discovered that hydraulic machines operated in turbine mode at low power loads present an improved behavior and efficiency when operated at a speed lower that the nominal speed at which grid frequency and generator frequency are adapted.

Such a control scheme presents the advantages of reduced turbulences in the waterflow, decreased ageing of the runner and reduced fluctuations of the output power.

There is a need for a method for commanding an installation comprising a hydraulic machine to operate at low power loads in turbine mode and provide the above-cited advantages.

There is a need for an installation comprising a hydraulic machine allowing operation at a low power loads.

To address those needs, the invention proposes a method for controlling an installation for converting hydraulic energy into electrical energy according to appended claim 1.

Detecting partial load operation may comprise receiving a signal indicating that the hydraulic machine may be operating or may be commanded to operate in a power load which is less than a predetermined power threshold.

The predetermined power threshold may be 50% of the maximum power of the generator.

The predetermined power threshold may be a function of the operating head.

It may be determined that the hydraulic machine may be operating in partial load operation by measuring the mechanical strain in the hydraulic machine with a measuring device.

The amplitude of the mechanical strain fluctuation may be greater than a predetermined threshold.

The mechanical strain measurements may be performed on the guide vanes of the hydraulic machine.

The mechanical strain measurements may be performed on the runner of the hydraulic machine.

It may be determined that the hydraulic machine may be operating in partial load operation by measuring the pressure in the gap between the guide vanes and the runner of the hydraulic machine.

The amplitude of pressure fluctuations in the hydraulic machine may be greater than a predetermined threshold.

It may be determined that the hydraulic machine may be operating in partial load by detecting that the amplitude of acoustic noise in the hydraulic machine may be greater than a predetermined threshold.

It may be determined that the hydraulic machine may be operating in partial load by detecting that the amplitude of hydraulic couple fluctuations on the output shaft of the hydraulic machine may be greater than a predetermined threshold.

It may be determined that the hydraulic machine may be operating in partial load by detecting that the amplitude of radial hydraulic thrust of the hydraulic machine may be greater than a predetermined threshold.

The hydraulic machine may be either a pump-turbine; a Francis turbine; or Francis turbine associated with a pump by a shaft in a ternary group.

The static frequency converter may be sized to provide enough power to start the hydraulic machine in pump mode and ramp up its speed to match the frequency of the grid in watered or dewatered conditions.

By watered or dewatered conditions, a person skilled in the art will understand that the guide vanes and main inlet valve are closed and air is injected in the draft tube in order to reduce the turbine losses, which means the counter torque due to the water.

The static frequency converter may be sized to match the maximum partial load power output in any head condition, or to match a fraction of the maximum partial load power output.

According to another aspect of the invention, there is provided an installation for converting hydraulic energy into electrical energy according to appended claim 9.

The static frequency converter may be a load commutated inverter or a voltage source inverter.

The installation and method for commanding according to the invention are advantageous in their capability to operate at low power loads without any compromise on mechanical or hydraulic aspects, allowing more flexible installations and access to the market of ancillary services with no requirements for mechanical or hydraulic modifications of present installations.

They also present an advantage in the ability to retrofit existing installations for operating range extension without hydraulic, mechanical or electrical design modification.

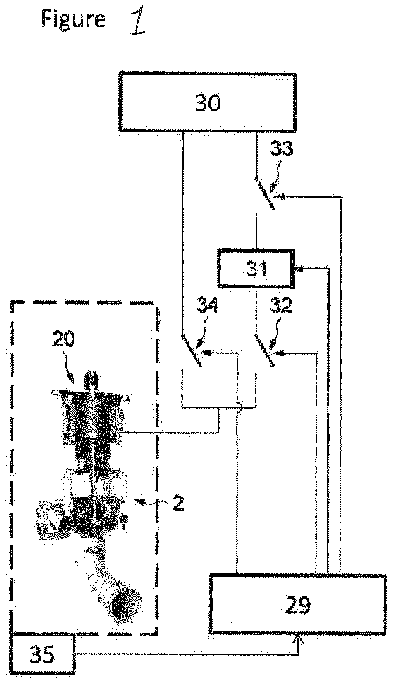

Other features and advantages will become apparent from the following description, given only by way of example, in view of the following drawing in which Figure 1 is a schematic drawing of a hydraulic installation permitting operation at low power loads.

An installation for converting hydraulic energy into electrical energy comprising a hydraulic machine 2, connections means 32,33,34, control means 29 and detection means 35. When operated in turbine mode, the hydraulic machine 2 uses hydraulic energy to set a shaft in rotation. The shaft is coupled to the rotor of a generator 20 that converts mechanical energy of the rotating rotor into electrical energy in the stator coupled to the grid 30.

The electrical energy generated in the stator can be injected in the grid once its frequency matches the frequency of the grid. It is to be noted that the frequency of the stator is directly proportional to the rotational speed of the rotor.

A hydraulic machine 2 is able to start in turbine mode without any external device. The hydraulic flow provides indeed a motor torque that enables the hydraulic machine speed to reach the synchronous speed, required to match the frequency of the grid, without external power. Once the synchronous speed is reached, the turbine is directly connected to the grid.

In pump mode, the desired flow of water being opposed by the effect of gravity, there is no movement of water to provide an initial torque. Moreover, the hydraulic machine 2 cannot be started by receiving power from the grid since there is a frequency mismatch. A static frequency converter is used, often in parallel to dewatering the runner, to power up the hydraulic machine 2 and ramp up its speed up to a speed allowing synchronous operation with the grid (i.e., the frequency of the power consumed by the hydraulic machine 2 is sensibly equal to the frequency of the power in the grid). The grid can then be directly connected to the hydraulic machine 2 without needing the static frequency converter any more.

This static frequency converter is present in a large majority of PHES built in the last decades. However, in an effort to reduce costs, said static frequency converter is sized to match the power required to start the hydraulic machine 2 in pump mode, which is significantly lower than the power produced in turbine mode. The static frequency converter is then considered to be partial size in regard to the maximum power produced in turbine mode.

Despite its limited power, the inventors have had the idea to use the static frequency converter to enable hydraulic machine 2 continuous operation at low power loads to increase operating domain, to save the cost of adapting the design of hydraulic machine for operation at low power loads, or the replacement of the partial size frequency converters by full size ones in order to enable operation at low power loads in turbine mode.

The installation and method according to the invention uses the static frequency converter used to power up the hydraulic machine 2 when it is operated in pump mode and to couple the hydraulic machine 2 operated in turbine mode to the grid when its rotational speed is lower than the rotational speed required to produce power at a frequency matching the frequency of the grid.

The static frequency converter allows modifying the frequency of the electrical energy produced to match the frequency of the grid through commonly known methods. Injection on the grid is therefore made possible in a domain previously unavailable.

In these applications, the static frequency converter can be a load commutated inverter or a voltage source inverter or equivalent.

The installation comprises control means 29 for controlling the first, second and third connection means depending on the load operation of the hydraulic machine. First, second and third connection means can be any switching means able to withstand the power generated by the hydraulic machine and its generator. According to the state of the art, such connection means can be an IGBT (acronym for Insulated Gate Bipolar Transistor) or an array of IGBTs in parallel.

The generator 20 linked to the hydraulic machine 2 is connected to a static frequency converter 31 through first connection means 32, said static frequency converter 31 being connected to the grid 30 through second connection means 33.

The generator 20 is also directly connected to the grid through third connection means 34.

First, second and third connection means are commendable. In other words, they can switch between a conducting state and a non-conducting state depending on a command signal received from control means 29. The static frequency converter may comprise switching cells using diodes, thyristors and transistors working as controlled switches to produce a current at the grid frequency out of the current produced by the generator 20. The switching frequency of cells may be controlled by control means 29 to decrease the unit speed to avoid the occurrence of hydraulic instability that may be caused during partial load operation.

Detection means 35 is arranged to determine whether the hydraulic machine is operated in partial load or in non-partial load. This can be achieved upon reception of a signal indicating that the hydraulic machine is operating or is commanded to operate in a power load which is less than a predetermined power threshold. Partial load operation can also be detected by analysis of the amplitude of the mechanical strain fluctuations on either the guide vanes or the runner of the hydraulic machine, the amplitude of pressure fluctuations in the gap between the guide vanes and the runner of the hydraulic machine, the amplitude of acoustic noise in the hydraulic machine, the amplitude of hydraulic couple fluctuations on the output shaft of the hydraulic machine or the amplitude of radial hydraulic thrust of the hydraulic machine. In an embodiment, those measurements are compared to a predetermined threshold.

The control means 29 controls the installation according to the following method based upon data received from detection means 35.

The method for controlling an installation for converting hydraulic energy into electrical energy comprising a hydraulic machine 2 will now be described.

During a first step, it is determined whether the hydraulic machine is operated or is commanded to operate at partial load.

If the hydraulic machine is operated at partial load, the hydraulic machine 2 is connected to the grid through the static frequency converter 31, the static frequency converter 31 being commanded to decrease the frequency of hydraulic machine while keeping the frequency similar to those of the grid. In that intent, a command signal is emitted by control means 29 so that first connection means 32 and second connection means 33 are switched to a conducting state, third connection means 34 being switched to a non-conducting state. Command means 29 commands the static frequency converter 31 to adapt the frequency of the power generated.

If the hydraulic machine is not operated at partial load, the hydraulic machine 2 is connected directly to the grid. A command signal is emitted by control means 29 so that first connection means 32 and second connection means 33 are switched to a non-conducting state, third connection means 34 being switched to a conducting state.

## Claims

1. Method for controlling an installation for converting hydraulic energy into electrical energy comprising a hydraulic machine operated in turbine mode,
said hydraulic machine (2) being linked to a generator by a shaft,
the installation comprising
first connection means (32) connecting a static frequency converter and the generator,
second connection means (33) connecting the static frequency converter and the grid, and
third connection means (34) connecting the generator and the grid,
said method comprising the steps of:
detecting partial load operation of the hydraulic machine; and upon detection of partial load operation,
switching first connection means (32) and second connection means (33) to a conducting state,
switching third connection means (34) to a nonconducting state,
commanding the static frequency converter to reduce the rotation speed of the hydraulic machine (2), wherein it is determined that the hydraulic machine is operating in partial load operation
- by measuring a mechanical strain in the hydraulic machine with a measuring device and/or
- by measuring a pressure in the gap between the guide vanes and the runner of the hydraulic machine and/or
- by detecting that an amplitude of acoustic noise in the hydraulic machine is greater than a predetermined threshold and/or
- by detecting that an amplitude of hydraulic couple fluctuations on the output shaft of the hydraulic machine is greater than a predetermined threshold and/or
- by detecting that an amplitude of radial hydraulic thrust of the hydraulic machine is greater than a predetermined threshold.

2. Method according to claim 1, the method comprising:
detecting non-partial load operation of the hydraulic machine; and
commanding first connection means (32) and second connection means (33) to a non-conducting state and commanding third connection means (34) to a conducting state.

3. Method according to claim 1 or 2, wherein detecting partial load operation comprises receiving a signal indicating that the hydraulic machine is operating or is commanded to operate in a power load which is less than a predetermined power threshold.

4. Method according to any preceding claim, wherein the predetermined power threshold is 50% of the maximum power of the generator.

5. Method according to claim 3, wherein the predetermined power threshold is a function of the operating head.

6. Method according to any preceding claim, wherein the amplitude of the mechanical strain fluctuation is greater than a predetermined threshold.

7. Method according to any preceding claim, wherein the mechanical strain measurements are performed on the guide vanes of the hydraulic machine.

8. Method according to any preceding claim, wherein the mechanical strain measurements are performed on the runner of the hydraulic machine.

9. Installation for converting hydraulic energy into electrical energy, provided with a hydraulic machine arranged to be operated in turbine mode, said hydraulic machine (2) being linked to a generator (20) by a shaft, wherein said installation comprises:
first connection means (32) connecting a static frequency converter and the generator,
second connection means (33) connecting the static frequency converter and the grid,
third connection means (34) connecting the generator and the grid, and
control means (29) to command the installation according to the method as claimed in any of the preceding claims.

## Patentansprüche

1. Verfahren zum Steuern einer Anlage zur Umwandlung von hydraulischer Energie in elektrische Energie, umfassend eine hydraulische Maschine, die im Turbinenbetrieb betrieben wird,
wobei die hydraulische Maschine (2) durch eine Welle mit einem Generator gekoppelt ist,
die Anlage umfassend
erste Verbindungsmittel (32), die einen statischen Frequenzumrichter und den Generator verbinden,
zweite Verbindungsmittel (33), die den statischen Frequenzumrichter und das Netz verbinden, und
dritte Verbindungsmittel (34), die den Generator und das Netz verbinden,
wobei das Verfahren die Schritte umfasst von:
Erkennung eines Teillastbetriebs der hydraulischen Maschine; und bei Erkennung eines Teillastbetriebs,
Schalten der ersten Verbindungsmittel (32) und der zweiten Verbindungsmittel (33) in einen leitenden Zustand, Schalten der dritten Verbindungsmittel (34) in einen nichtleitenden Zustand,
Ansteuerung des statischen Frequenzumrichters zur Reduzierung der Drehzahl der hydraulischen Maschine (2), wobei bestimmt wird, dass die hydraulische Maschine im Teillastbetrieb arbeitet,
- durch Messen einer mechanischen Spannung in der hydraulischen Maschine mit einer Messvorrichtung und/oder
- durch Messen eines Drucks in dem Spalt zwischen den Leitschaufeln und dem Läufer der hydraulischen Maschine und/oder
- durch Erkennung, dass eine Amplitude des akustischen Rauschens in der hydraulischen Maschine größer als ein vorbestimmter Schwellenwert ist und/oder
- durch Erkennung, dass eine Amplitude der Schwankungen des hydraulischen Kopplers an der Abtriebswelle der hydraulischen Maschine größer als ein vorbestimmter Schwellenwert ist und/oder
- durch Erkennung, dass eine Amplitude des radialen hydraulischen Schubs der hydraulischen Maschine größer als ein vorbestimmter Schwellenwert ist.

2. Verfahren nach Anspruch 1, das Verfahren umfassend:
Erkennung eines Teillastbetriebs der hydraulischen Maschine; und
Ansteuerung der ersten Verbindungseinrichtung (32) und der zweiten Verbindungseinrichtung (33) in einen nichtleitenden Zustand und Befehlen der dritten Verbindungseinrichtung (34) in einen leitenden Zustand.

3. Verfahren nach Anspruch 1 oder 2, wobei die Erkennung des Teillastbetriebs das Empfangen eines Signals umfasst, das anzeigt, dass die hydraulische Maschine bei einer Leistungslast arbeitet oder angesteuert wird, bei einer Leistungslast zu arbeiten, die kleiner als ein vorbestimmter Leistungsschwellenwert ist.

4. Verfahren nach einem der vorstehenden Ansprüche, wobei die vorbestimmte Leistungsschwelle 50% der maximalen Leistung des Generators beträgt.

5. Verfahren nach Anspruch 3, wobei die vorbestimmte Leistungsschwelle eine Funktion des Arbeitskopfes ist.

6. Verfahren nach einem der vorstehenden Ansprüche, wobei die Amplitude der mechanischen Dehnungsschwankung größer als ein vorbestimmter Schwellenwert ist.

7. Verfahren nach einem der vorstehenden Ansprüche, wobei die mechanischen Dehnungsmessungen an den Leitschaufeln der hydraulischen Maschine durchgeführt werden.

8. Verfahren nach einem der vorstehenden Ansprüche, wobei die mechanischen Dehnungsmessungen an dem Läufer der hydraulischen Maschine durchgeführt werden.

9. Anlage zur Umwandlung von hydraulischer Energie in elektrische Energie, die mit einer hydraulischen Maschine bereitgestellt ist, die angeordnet ist, um im Turbinenbetrieb betrieben zu werden, wobei die hydraulische Maschine (2) über eine Welle mit einem Generator (20) gekoppelt ist, **dadurch gekennzeichnet, dass** die Anlage umfasst:
erste Verbindungsmittel (32), die einen statischen Frequenzumrichter und den Generator verbinden,
zweite Verbindungsmittel (33), die den statischen Frequenzumrichter und das Netz verbinden,
dritte Verbindungsmittel (34), die den Generator und das Netz verbinden, und
Steuermittel (29), um die Anlage gemäß dem Verfahren nach einem der vorstehenden Ansprüche anzusteuern.

## Revendications

1. Procédé pour commander une installation de conversion d'énergie hydraulique en énergie électrique comprenant une machine hydraulique fonctionnant en mode turbine,
ladite machine hydraulique (2) étant reliée à un générateur par un arbre,
l'installation comprenant
un premier moyen de connexion (32) connectant un convertisseur de fréquence statique et le générateur,
un deuxième moyen de connexion (33) connectant le convertisseur de fréquence statique et le réseau, et
un troisième moyen de connexion (34) connectant le générateur et le réseau,
ledit procédé comprenant les étapes consistant à :
détecter un fonctionnement à charge partielle de la machine hydraulique ; et lors d'une détection de fonctionnement à charge partielle,
commuter le premier moyen de connexion (32) et le second moyen de connexion (33) à un état conducteur,
commuter le troisième moyen de connexion (34) à un état non conducteur,
commander au convertisseur de fréquence statique de réduire la vitesse de rotation de la machine hydraulique (2), dans lequel il est déterminé que la machine hydraulique fonctionne en fonctionnement à charge partielle
- en mesurant une contrainte mécanique dans la machine hydraulique à l'aide d'un dispositif de mesure et/ou
- en mesurant une pression dans l'intervalle entre les aubes directrices et la roue de la machine hydraulique et/ou
- en détectant qu'une amplitude de bruit acoustique dans la machine hydraulique est supérieure à un seuil prédéterminé et/ou
- en détectant qu'une amplitude de fluctuations de couple hydraulique sur l'arbre de sortie de la machine hydraulique est supérieure à un seuil prédéterminé et/ou
- en détectant qu'une amplitude de poussée hydraulique radiale de la machine hydraulique est supérieure à un seuil prédéterminé.

2. Procédé selon la revendication 1, le procédé comprenant les étapes consistant à :
détecter un fonctionnement à charge non partielle de la machine hydraulique ; et
commander le premier moyen de connexion (32) et le deuxième moyen de connexion (33) à un état non conducteur et commander le troisième moyen de connexion (34) à un état conducteur.

3. Procédé selon la revendication 1 ou 2, dans lequel la détection d'un fonctionnement à charge partielle comprend une réception d'un signal indiquant que la machine hydraulique fonctionne ou est commandée pour fonctionner avec une charge de puissance qui est inférieure à un seuil de puissance prédéterminé.

4. Procédé selon l'une quelconque des revendications précédentes, dans lequel le seuil de puissance prédéterminé est de 50 % de la puissance maximale du générateur.

5. Procédé selon la revendication 3, dans lequel le seuil de puissance prédéterminé est une fonction de la tête de commande.

6. Procédé selon l'une quelconque des revendications précédentes, dans lequel l'amplitude de la fluctuation de contrainte mécanique est supérieure à un seuil prédéterminé.

7. Procédé selon l'une quelconque des revendications précédentes, dans lequel les mesures de contrainte mécanique sont effectuées sur les aubes directrices de la machine hydraulique.

8. Procédé selon l'une quelconque des revendications précédentes, dans lequel les mesures de contrainte mécanique sont effectuées sur la roue de la machine hydraulique.

9. Installation pour convertir de l'énergie hydraulique en énergie électrique, pourvue d'une machine hydraulique agencée pour fonctionner en mode turbine, ladite machine hydraulique (2) étant reliée à un générateur (20) par un arbre, dans laquelle ladite installation comprend :
un premier moyen de connexion (32) connectant un convertisseur de fréquence statique et le générateur,
un deuxième moyen de connexion (33) connectant le convertisseur de fréquence statique et le réseau,
un troisième moyen de connexion (34) connectant le générateur et le réseau, et
un moyen de commande (29) pour commander l'installation selon le procédé tel que revendiqué dans l'une quelconque des revendications précédentes.
